# EUROPEAN PATENT APPLICATION

(11) **EP 2 680 356 A1**
(43) Date of publication of application: **01.01.2014**
(21) Application number: 12749090.2
(22) Date of filing: 23.02.2012
(51) Int. Cl.: H01M 8/04, H01M 8/10

(54) **FUEL CELL SYSTEM**

(30) Priority: 23.02.2011 JP 2011037675
(71) Applicant: Nissan Motor Company, Limited, Kanagawa-ku Yokohama-shi Kanagawa 221-0023 (JP)
(72) Inventor: TOMITA, Yousuke, Kanagawa 243-0123 (JP)
(74) Representative: Hoefer & Partner
(86) International application number: PCT/JP2012/054436
(87) International publication number: WO 2012/115196

(57) **Abstract**

Provided is a fuel cell system for generating electricity by supplying a fuel cell with an anode gas and a cathode gas, the fuel cell system including: a buffer tank for storing an anode-off gas discharged from the fuel cell; a control valve for controlling a pressure of the anode gas supplied to the fuel cell; and anode gas pressure control means for controlling the control valve to increase the pressure of the anode gas as a required output increases. The anode gas pressure control means adjusts, in a transient operation in which the required output decreases, an opening of the control valve to a predetermined opening, thereby decreasing the pressure of the anode gas while supplying the anode gas.

## Description

### FIELD OF THE INVENTION

This invention relates to a fuel cell system.

### BACKGROUND

A fuel cell system described in JP 2007-517369 A includes a normally-closed solenoid valve provided in an anode gas supply passage, and a normally-open solenoid valve and a recycle tank (buffer tank) provided in sequence from the upstream in an anode gas discharge passage. The fuel cell system is a fuel cell system of an anode gas non-circulation type which does not return unused anode gas discharged in the anode gas discharge passage to the anode gas supply passage, and the normally-closed solenoid valve and the normally-open solenoid valve are periodically opened/closed.

### SUMMARY

In a fuel cell system of an anode gas non-circulation type which is currently developed by the inventors of this application, the pressure of an anode gas is increased as a required output increases considering an electric power generation efficiency. In this system, in a transient operation (hereinafter referred to as "downward transient operation") in which a required output for a fuel cell stack decreases, the pressure in an anode system rapidly decreases, and as a result, an anode-off gas greatly flows backward from a buffer tank. The anode-off gas contains a large amount of impurities such as nitrogen cross-leaking from a cathode system due to continued electric power generation, and thus such a problem has been found that a portion in which the anode gas density locally decreases is generated in an anode gas flow passage inside the fuel cell stack.

This invention has been made in view of the foregoing problem, and has an object to suppress, in the downward transient operation, the generation of a portion in which the anode gas density locally decreases in the anode gas flow passage.

In order to achieve the above-mentioned object, according to an aspect of this invention, there is provided a fuel cell system for generating electricity by supplying a fuel cell with an anode gas and a cathode gas, the fuel cell system including: a buffer tank for storing an anode-off gas discharged from the fuel cell; a control valve for controlling a pressure of the anode gas supplied to the fuel cell; and anode gas pressure control means for controlling the control valve to increase the pressure of the anode gas as a required output increases, in which the anode gas pressure control means adjusts, in a downward transient operation in which the required output decreases, an opening of the control valve to a predetermined opening, thereby decreasing the pressure of the anode gas while supplying the anode gas.

An embodiment and advantages of the present invention are described in detail below with reference to the accompanying drawings.

### BRIEF DESCRIPTION OF DRAWINGS

FIG. 1 is a schematic perspective view of a fuel cell.
FIG. 2 is a cross sectional view of the fuel cell in FIG. 1.
FIG. 3 is a schematic configuration diagram of a fuel cell system of an anode gas non-circulation type according to an embodiment of this invention.
FIGS. 4 are diagrams illustrating a pulsation operation in a steady operation.
FIG. 5 is a flowchart illustrating pulsation operation control according to the embodiment of this invention.
FIG. 6 is a flowchart illustrating normal operation processing according to the embodiment of this invention.
FIG. 7 is a flowchart illustrating downward transient operation processing according to the embodiment of this invention.
FIG. 8 is a flowchart illustrating control for a purge valve according to the embodiment of this invention.
FIGS. 9 are time charts illustrating an operation of the pulsation operation control according to the embodiment of this invention.
FIGS. 10 are diagrams illustrating an effect of the pulsation operation control according to the embodiment of this invention.
FIGS. 11 are time charts illustrating a change in an anode pressure when a pressure regulation valve is fully closed in the downward transient operation, thereby decreasing the anode pressure to a lower limit pressure.
FIGS. 12 are diagrams illustrating a reason for generation of a portion locally lower in an anode gas density than the other portions in an anode gas flow passage.

### DEATILED DESCRIPTION

A fuel cell generates electricity by placing an anode electrode (fuel electrode) and a cathode electrode (oxidizing agent electrode) on both sides of an electrolyte membrane, supplying the anode electrode with an anode gas (fuel gas) containing hydrogen, and supplying the cathode electrode with a cathode gas (oxidizing agent gas) containing oxygen. Electrode reactions which progress on both the anode electrode and the cathode electrode are described below.

Anode electrode: 2H₂→4H⁺+4e⁻ (1)

Cathode electrode: 4H⁺+4e⁻+O₂→2H₂O (2)

As a result of the electrode reactions represented by Expressions (1) and (2), the fuel cell generates an electromotive force at a level of approximately 1 volt.

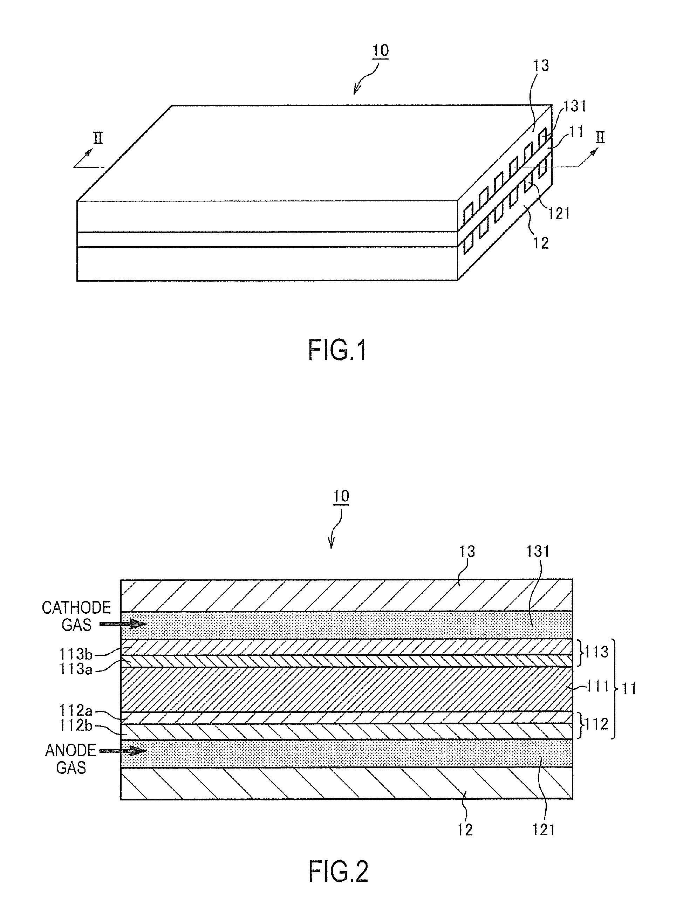

FIGS. 1 and 2 are diagrams illustrating a structure of a fuel cell 10 according to an embodiment of this invention. FIG. 1 is a schematic perspective view of the fuel cell 10. FIG. 2 is a cross sectional view of the fuel cell 10 taken along the line II-II of FIG. 1.

The fuel cell 10 is constructed by arranging, on both front and rear surfaces of a membrane electrode assembly (hereinafter referred to as "MEA"), an anode separator 12 and a cathode separator 13.

The MEA 11 is provided with an electrolyte membrane 111, an anode electrode 112, and a cathode electrode 113. The MEA 11 includes the anode electrode 112 on one surface of the electrolyte membrane 111, and includes the cathode electrode 113 on the other surface thereof.

The electrolyte membrane 111 is an ion exchange membrane of a proton conductive type formed of a fluorine-based resin. The electrolyte membrane 111 exhibits an excellent electrical conductivity in a wet state.

The anode electrode 112 is provided with a catalyst layer 112a and a gas diffusion layer 112b. The catalyst layer 112a is held in contact with the electrolyte membrane 111. The catalyst layer 112a is made of platinum or carbon black particles supporting platinum and the like. The gas diffusion layer 112b is provided outside the catalyst layer 112a (on the opposite side of the electrolyte membrane 111), and is held in contact with the anode separator 12. The gas diffusion layer 112b is formed of a member having sufficient gas diffusion property and electrical conductivity, for example, a carbon cloth woven by yarns made of carbon fibers.

Similarly to the anode electrode 112, the cathode electrode 113 is provided with a catalyst layer 113a and a gas diffusion layer 113b.

The anode separator 12 is held in contact with the gas diffusion layer 112b. The anode separator 12 includes, on a side in contact with the gas diffusion layer 112b, a plurality of anode gas flow passages 121 in a shape of grooves for supplying the anode electrode 112 with the anode gas.

The cathode separator 13 is held in contact with the gas diffusion layer 113b. The cathode separator 13 includes, on a side in contact with the gas diffusion layer 113b, a plurality of cathode gas flow passages 131 in a shape of grooves for supplying the cathode electrode 113 with the cathode gas.

The anode gas flowing through the anode gas flow passages 121 and the cathode gas flowing through the cathode gas flow passages 131 flow in the same direction and in parallel to each other. The anode gas and the cathode gas may be controlled to flow in directions opposite to each other in parallel to each other.

When the fuel cell 10 configured as described above is used as a power source for a motor vehicle, a required electric power is high, and hence the fuel cells 10 are used as a fuel cell stack in which hundreds of the fuel cells 10 are stacked. Then, a fuel cell system in which the anode gas and the cathode gas are supplied to the fuel cell stack is constructed, thereby extracting the electric power for driving the motor vehicle.

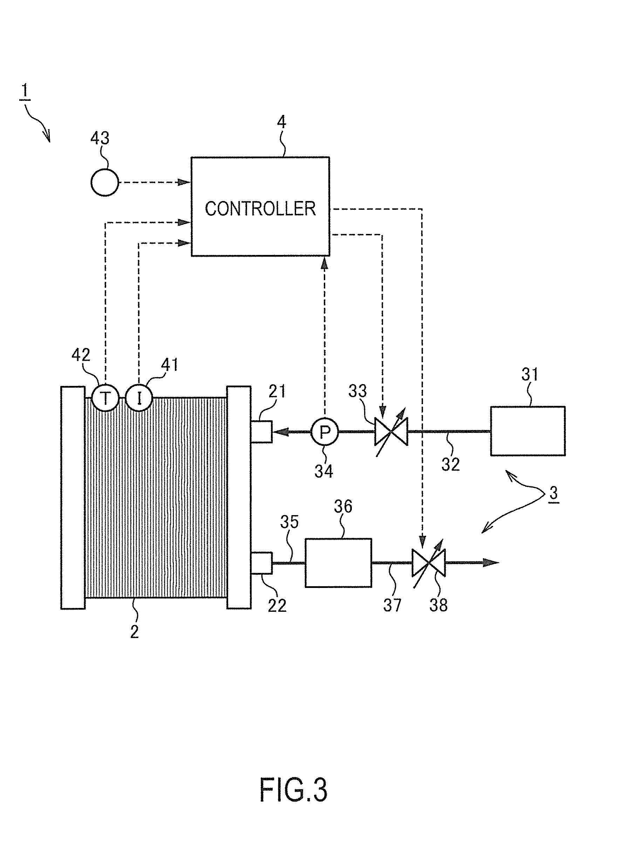

FIG. 3 is a schematic configuration diagram of a fuel cell system 1 of an anode gas non-circulation type according to the embodiment of this invention.

The fuel cell system 1 includes a fuel cell stack 2, an anode gas supply device 3, and a controller 4.

The fuel cell stack 2 is constructed by stacking a plurality of the fuel cells 10, receives the anode gas and the cathode gas to generate electric power, and generates electric power required for driving a vehicle (such as electric power required for driving a motor).

A cathode gas supply and discharge device for supplying/ discharging the cathode gas to/from the fuel cell stack 2, and a cooling device for cooling the fuel cell stack 2 are not principal components of this invention, and are not illustrated for the sake of easy understanding. According to this embodiment, as the cathode gas, the air is used.

The anode gas supply device 3 includes a high pressure tank 31, an anode gas supply passage 32, a pressure regulation valve 33, a pressure sensor 34, an anode gas discharge passage 35, a buffer tank 36, a purge passage 37, and a purge valve 38.

The high pressure tank 31 stores the anode gas to be supplied to the fuel cell stack 2 while maintaining the anode gas in a high pressure state.

The anode gas supply passage 32 is a passage for supplying the fuel cell stack 2 with the anode gas discharged from the high pressure tank 31. One end portion of the anode gas supply passage 32 is connected to the high pressure tank 31, and the other end portion thereof is connected to an anode gas inlet hole 21 of the fuel cell stack 2.

The pressure regulation valve 33 is provided to the anode gas supply passage 32. The pressure regulation valve 33 adjusts the anode gas discharged from the high pressure tank 31 at a desired pressure, and supplies the fuel cell stack 2 with the adjusted anode gas. The pressure regulation valve 33 is an electromagnetic valve which can adjust an opening thereof continuously or stepwise, and the opening is controlled by the controller 4.

The pressure sensor 34 is provided to the anode gas supply passage 32 downstream of the pressure regulation valve 33. The pressure sensor 34 detects a pressure of the anode gas flowing in the anode gas supply passage 32 downstream of the pressure regulation valve 33. According to this embodiment, the pressure of the anode gas detected by the pressure sensor 34 is used as a substitute of a pressure (hereinafter referred to as "anode pressure") of an entire anode system including the anode gas flow passages 121 inside the fuel cell stack, and the buffer tank 36.

The anode gas discharge passage 35 is connected, at one end portion, to an anode gas outlet hole 22 of the fuel cell stack 2, and, at the other end portion, to an upper portion of the buffer tank 36. To the anode gas discharge passage 35, a mixed gas (hereinafter referred to as "anode-off gas") of an excessive anode gas which has not been used for the electrode reactions and gas impurities such as nitrogen and vapor cross-leaking from the cathode side to the anode gas flow passages 121 is discharged.

The buffer tank 36 temporarily stores the anode-off gas which has flowed through the anode gas discharge passage 35. A part of the vapor in the anode-off gas is condensed into liquid water in the buffer tank 36, and is separated from the anode-off gas.

The purge passage 37 is connected, at one end portion, to a lower portion of the buffer tank 36. The other end portion of the purge passage 37 forms an open end. The anode-off gas and the liquid water stored in the buffer tank 36 are discharged via the purge passage 37 from the open end to the outside air.

The purge valve 38 is provided to the purge passage 37. The purge valve 38 is an electromagnetic valve which can adjust an opening thereof continuously or stepwise, and the opening is controlled by the controller 4. By adjusting the opening of the purge valve 38, an amount of the anode-off gas discharged from the buffer tank 36 via the purge passage 37 to the outside air is adjusted so that an anode gas density in the buffer tank 36 is adjusted to be equal to or less than a predetermined density. This is because, when the anode gas density in the buffer tank 36 becomes too high, the anode gas amount discharged from the buffer tank 36 via the purge passage 37 to the outside air increases, and is thus wasted.

The controller 48 is formed of a microcomputer provided with a central processing unit (CPU), a read only memory (ROM), a random access memory (RAM), and an input/output interface (I/O interface).

The controller 4 inputs signals for detecting an operation state of the fuel cell system 1 such as, in addition to the above-mentioned pressure sensor 34, a current sensor 41 for detecting an output current of the fuel cell stack 2, a temperature sensor 42 for detecting a temperature of a coolant (hereinafter referred to as "coolant temperature") for cooling the fuel cell stack 2, and an accelerator stroke sensor 43 for detecting a depressed amount of an accelerator pedal (hereinafter referred to as "accelerator operation amount ").

The controller 4 periodically opens/closes the pressure regulation valve 33 based on these input signals, carries out a pulsation operation for periodically increasing and decreasing the anode pressure, and adjusts the opening of the purge valve 38, thereby adjusting the flow amount of the anode-off gas discharged from the buffer tank 36 and maintaining the anode gas density in the buffer tank 36 at a predetermined density or lower.

In the case of the fuel cell system 1 of the anode gas non-circulation type, when the pressure regulation valve 33 is kept open to continue the supply of the anode gas from the high pressure tank 31 to the fuel cell stack 2, the anode-off gas containing the unused anode gas discharged from the fuel cell stack 2 keeps being discharged from the buffer tank 36 via the purge passage 37 to the outside air, and is thus wasted.

Thus, according to this embodiment, the pulsation operation in which the pressure regulation valve 33 is periodically opened/closed to periodically increase/decrease the anode pressure is carried out. With the pulsation operation, the gas impurities such as nitrogen and vapor, which have cross-leaked to an electricity generation region (anode gas flow passages 121) of the fuel cell stack, can be stored in the buffer tank 36. As a result, while the anode gas density in the electricity generation region is maintained high, the anode gas amount discharged to the outside air can be reduced, resulting in a decrease in waste.

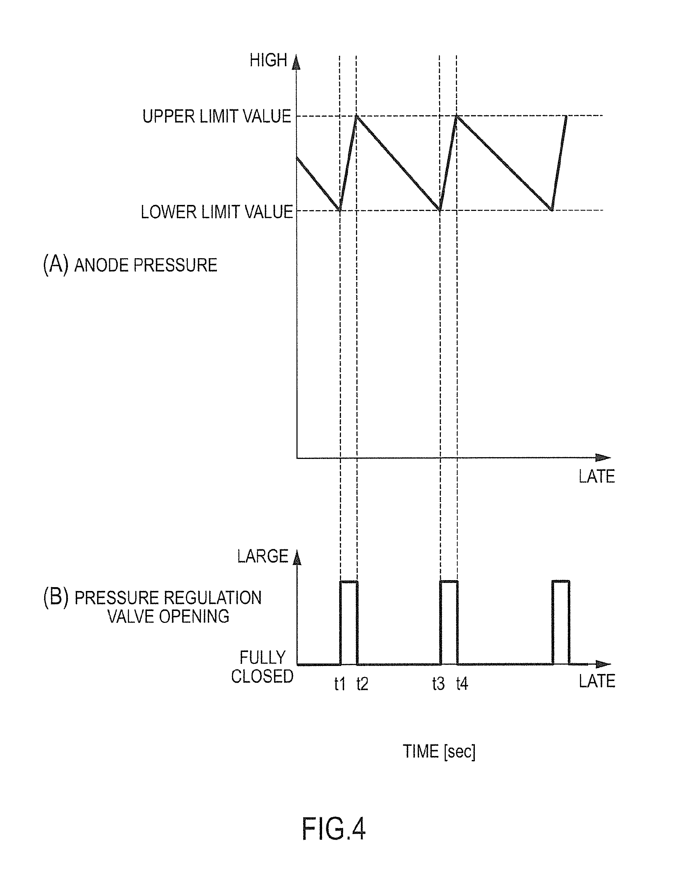

A description is now given of the pulsation operation referring to FIGS. 4, and of a reason why the anode-off gas stored in the buffer tank 36 flows backward to the fuel cell stack 2 when the anode pressure is decreased.

FIGS. 4 are diagrams illustrating the pulsation operation in a steady operation in which the operation state of the fuel cell system 1 is constant.

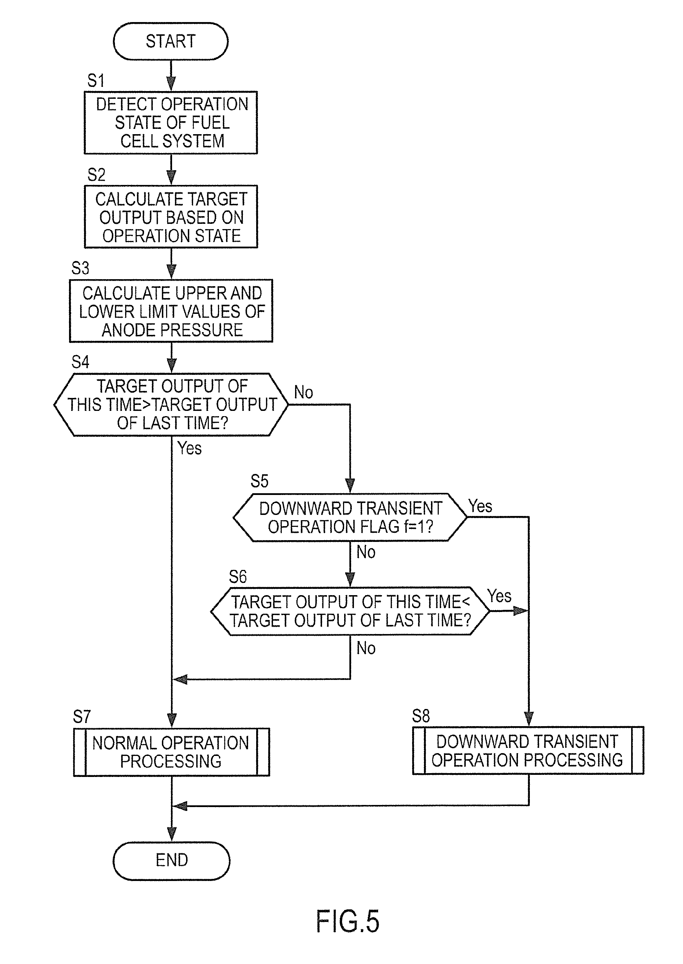

As illustrated in FIG. 4(A), the controller 4 calculates, based on the operation state of the fuel cell system 1, a target output of the fuel cell stack 2, thereby setting an upper limit value and a lower limit value of the anode pressure in accordance with the target output. Then, the controller 4 periodically increases/decreases the anode pressure between the set upper limit value and lower limit value of the anode pressure. It should be noted that a detailed description is later given of the setting of the upper limit value and the lower limit value of the anode pressure referring to a flowchart of FIG. 5 (Step S3).

The pulsation operation carries out feedback control based on a target pressure and an actual pressure. Specifically, when the anode pressure reaches the lower limit value at time t1, the upper limit value is set as the target pressure of the anode pressure, and the feedback control toward the target pressure is carried out. As a result, as illustrated in FIG. 4(B), the pressure regulation valve 33 is opened to an opening which can increase the anode pressure to at least the upper limit. In this state, the anode gas is supplied from the high pressure tank 31 to the fuel cell stack 2, and is discharged to the buffer tank 36.

When the anode pressure reaches the upper limit value at time t2, the lower limit value is set as the target pressure, and the feedback control toward the target pressure is carried out. As a result, as illustrated in FIG. 4(B), the pressure regulation valve 33 is fully closed, and the supply of the anode gas from the high pressure tank 31 to the fuel cell stack 2 is stopped. Then, by the above-mentioned electrode reactions (1), the anode gas left in the anode gas flow passages 121 inside the fuel cell stack is consumed as the time elapses, and the anode pressure decreases by an amount corresponding to the consumption of the anode gas. Comparing the increase rate and the decrease rate of the anode pressure to each other, the anode gas is supplied from the high pressure tank 31 upon the increase and the anode pressure thus increases quickly, but the decrease rate depends on an electricity generation amount (=consumed amount of hydrogen) at that time.

Moreover, when the anode gas left in the anode gas flow passages 121 is consumed, the pressure in the buffer tank 36 is temporarily higher than the pressure in the anode gas flow passages 121, and the anode-off gas flows backward from the buffer tank 36 to the anode gas flow passages 121. As a result, the anode gas left in the anode gas flow passages 121 and the anode gas that has flowed backward to the anode gas flow passages 121 are consumed as the time elapses, resulting in a further decrease in anode pressure.

When the anode pressure reaches the lower limit value at time t3, as at the time t1, the pressure regulation valve 33 is opened. Then, when the anode pressure again reaches the upper limit value at time t4, the pressure regulation valve 33 is fully closed.

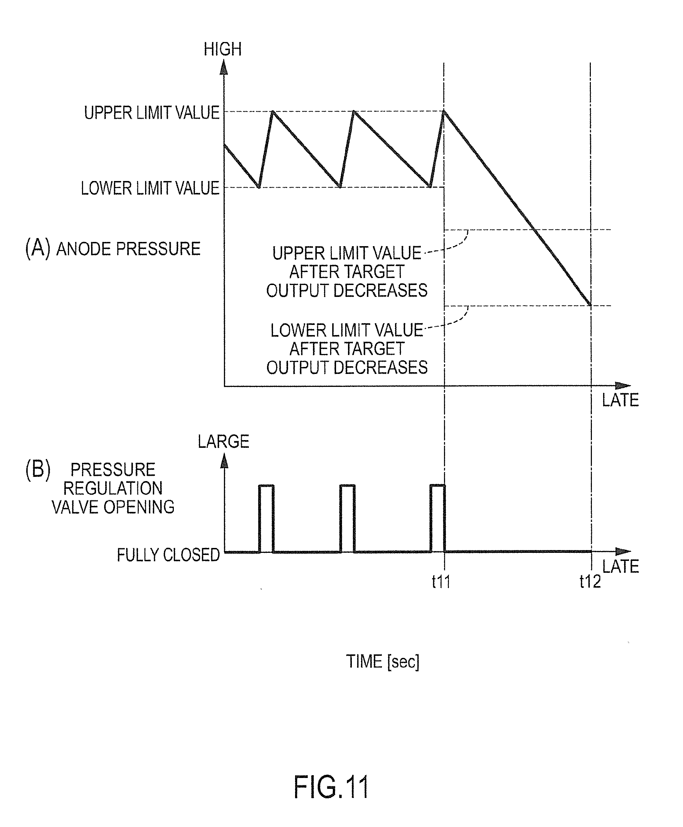

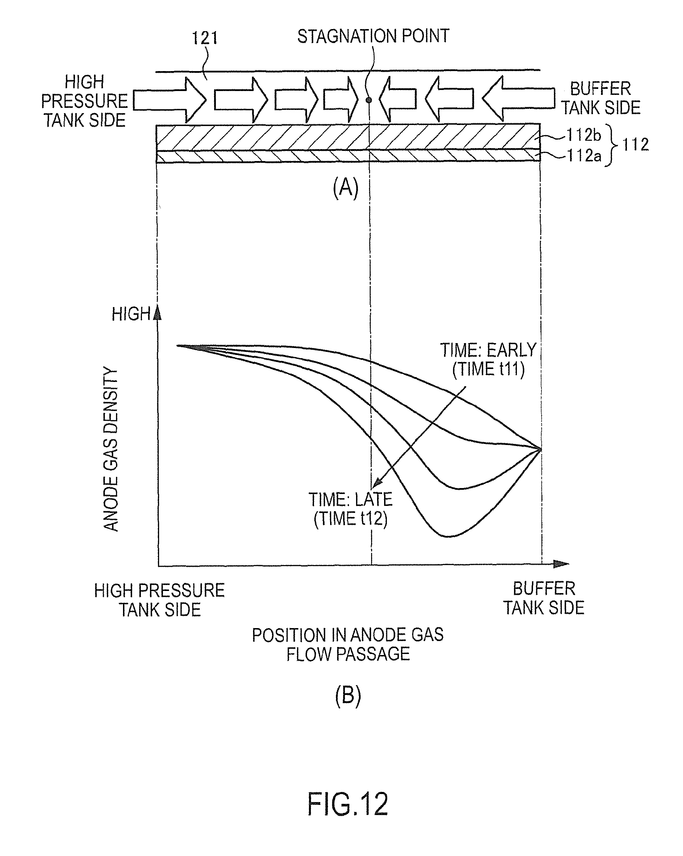

On this occasion, it was found out that, in a case where the pulsation operation is carried out in this way, when the operation state of the fuel cell system 1 changes, specifically, in a downward transient operation in which the output of the fuel cell stack 2 decreases and the anode pressure is decreased in response to the output decrease, there occurs a problem that, inside the anode gas flow passage 121, a portion where the anode gas density locally decreases compared to other portions is generated. Referring to FIGS. 11 and 12, a description is now given of this problem.

FIGS. 11 are time charts illustrating a change in anode pressure when only the feedback control for the anode pressure is carried out in the downward transient operation.

When, for example, an accelerator operation amount decreases and the target output of the fuel cell stack 2 decreases at time t11, as illustrated in FIG. 11 (A), the upper limit value and the lower limit value of the anode pressure are set in accordance with the decreased target output.

On this occasion, as the target pressure of the anode pressure, the lower limit value after the target output decreases is set, and, thus, as illustrated in FIGS. 11 (A) and 11 (B), the feedback control fully closes the pressure regulation valve 33 at the time t11. Then, when the anode pressure is decreased to the lower limit value in the state in which the pressure regulation valve 33 is fully closed (time t12), a portion which is lower in anode gas density than other portions is locally generated inside the anode gas flow passage 121. Referring to FIGS. 12, a description is given of the reason for this.

FIGS. 12 are diagrams illustrating the reason for generation of the portion locally lower in anode gas density than the other portions in the anode gas flow passage 121. FIG. 12(A) is a diagram illustrating, when the pressure regulation valve 33 is fully closed in the downward transient operation, the flows of the anode gas and the anode-off gas inside the anode gas flow passage 121. FIG. 12(B) is a diagram illustrating, when the pressure regulation valve 33 is fully closed in the downward transient operation, a density distribution of the anode gas inside the anode gas flow passage 121 along with the elapse of time.

As illustrated in FIG. 12(A), when the pressure regulation valve 33 is fully closed, the anode gas left in the anode gas flow passage 121 flows toward the buffer tank 36 side by inertia. Then, when the anode gas left in the anode gas flow passage 121 is consumed, the pressure in the buffer tank 36 becomes temporarily higher than the pressure in the anode gas flow passage 121, and the anode-off gas flows backward from the buffer tank 36 side to the anode gas flow passage 121.

Then, in a merging portion of the anode gas flowing in the anode gas flow passage 121 toward the buffer tank 36 side and the anode-off gas flowing backward from the buffer tank 36 side to the anode gas flow passage 121, a stagnation point where their respective gas flow rates are zero is generated.

When such a stagnation point is generated inside the anode gas flow passage 121, nitrogen in the anode-off gas which has not been used for the above-mentioned electrode reactions (1) is accumulated in the vicinity of the stagnation point as time elapses. On this occasion, the anode gas having a density of 100% is supplied from the high pressure tank 31 side, but the anode-off gas having a predetermined density of the anode gas (such as 70%) is supplied from the buffer tank 36 side. As a result, the nitrogen density at a portion slightly closer to the buffer tank 36 than the stagnation point increases compared to other portions as time elapses, and, as illustrated in FIG. 12(B), the anode gas density in the vicinity of the stagnation point thus decreases compared to the other portions as time elapses.

In this way, when the portion inside the anode gas flow passage 121 is locally lower in anode gas density than the other portions, at this portion, the above-mentioned electrode reactions (1) and (2) are prevented, and the voltage may turn to a negative voltage, thereby causing degradation of the fuel cell 10.

Thus, according to this embodiment, in the downward transient operation, the pressure regulation valve 33 set by the feedback control is not fully closed, but is opened to a predetermined opening for downward transition described later, and while the anode gas is supplied to the fuel cell stack 2, the anode pressure is decreased to the lower limit pressure. A description is now given of pulsation operation control according to this embodiment.

FIG. 5 is a flowchart illustrating the pulsation operation control according to this embodiment carried out by the controller 4. The controller 4 carries out this routine at a predetermined calculation cycle (such as 10 milliseconds) during the operation of the fuel cell system 1.

In Step S1, the controller 4 reads detected values of the above-mentioned various sensors, thereby detecting the operation state of the fuel cell system 1.

In Step S2, the controller 4 calculates, based on the operation state of the fuel cell system 1, the target output of the fuel cell stack 2. The target output basically increases as the accelerator operation amount increases.

In Step S3, the controller 4 calculates, based on the target output of the fuel cell stack 2, the upper limit value and the lower limit value of the anode pressure for the pulsation operation at the target output. The upper limit value and the lower limit value of the anode pressure are set so as to increase as the target output increases. The upper limit value and the lower limit value of the anode pressure determine an amplitude (pulsation width) of the pulsation. The upper limit value and the lower limit value of the anode pressure are set so as to push the gas impurities, which cross-leak into the anode gas flow passages 121 during the electric power generation, by means of the pulsation from the electric power generation region to the buffer tank 36, thereby maintaining the hydrogen partial pressure in the electric power generation region. As a result, as the upper limit value and the lower limit value increase in response to the required output, the pulsation width increases. It should be noted that the upper limit value and the lower limit value of the anode pressure may be corrected in accordance with a coolant temperature. Specifically, the correction is carried out so as to increase the target output as the coolant temperature increases.

Steps S4 to S6 are steps of determining whether the current operation state of the fuel cell system 1 is the steady operation state, the downward transient operation state, or a transient operation state (hereinafter referred to as "upward transient operation state") in which the output of the fuel cell stack 2 is increased toward the target output. When the operation is in the steady operation state or the upward transient operation state, the controller 4 finally proceeds to processing of Step S7, and when the operation state is in the downward transient operation state, the controller 4 finally proceeds to processing of Step S8.

In Step S4, the controller 4 determines whether or not the target output currently calculated is larger than the target output calculated last time. When the target output calculated this time is larger than the target output calculated last time, the controller 4 carries out the processing of Step S7, otherwise, the controller 4 carries out the processing of Step S5.

In Step S5, the controller 4 determines whether or not a downward transient operation flag f is 1. The downward transient operation flag f has an initial value of 0, and is set to 1 in the downward transient operation. The controller 4 carries out, when the downward transient operation flag is 1, the processing of Step S8, and carries out, when the downward transient operation flag is 0, processing of Step S6.

In Step S6, the controller 4 determines whether or not the target output currently calculated is smaller than the target output calculated last time. When the target output calculated this time is smaller than the target output calculated last time, the controller 4 carries out the processing of Step S8, otherwise, the controller 4 carries out processing of Step S7.

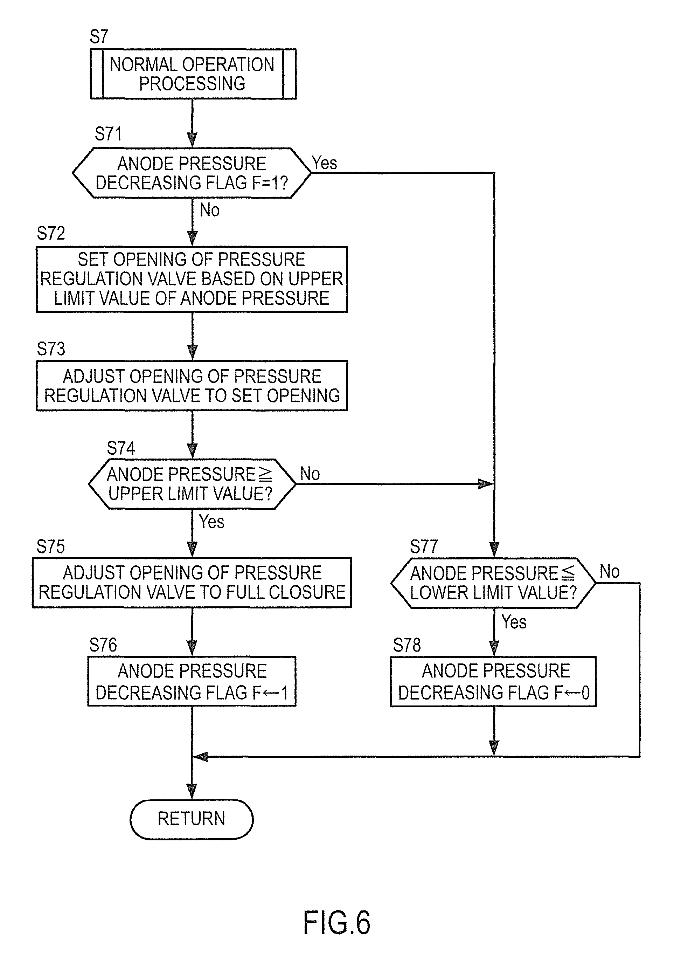

In Step S7, the controller 4 carries out normal operation processing. A detailed description is later given of the normal operation processing referring to FIG. 6.

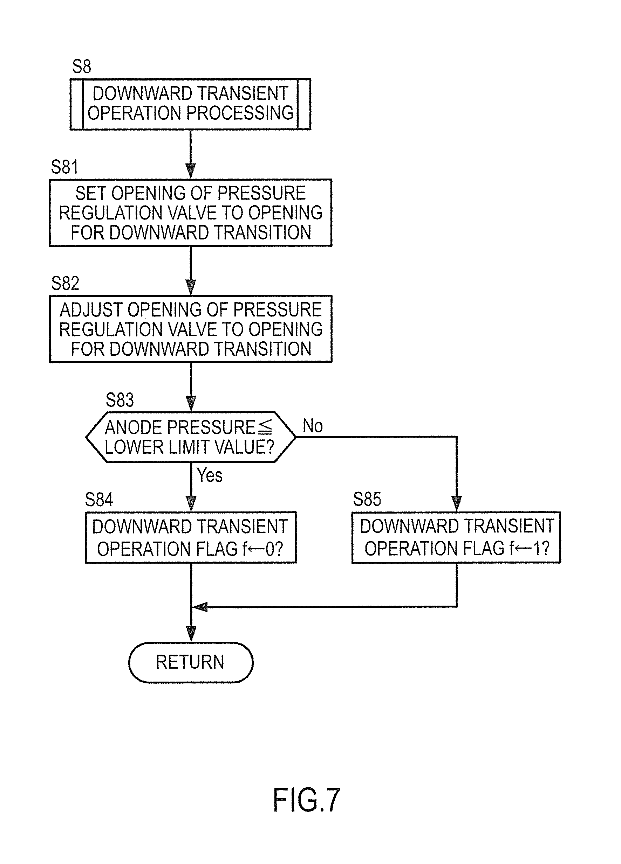

In Step S8, the controller 4 carries out downward transient operation processing. A detailed description is later given of the downward transient operation processing referring to FIG. 7.

FIG. 6 is a flowchart illustrating the normal operation processing. The normal operation processing is carried out in the steady operation and the upward transient operation. The normal operation processing is basically the feedback control based on the upper limit value and the lower limit value of the anode pressure, but this routine switches between pressure increasing control and pressure decreasing control depending on the flag.

In Step S71, the controller 4 determines whether or not an anode pressure decreasing flag F is 1. The anode pressure decreasing flag F has an initial value of 0, and is set to 1 after the anode pressure reaches the upper limit pressure until the anode pressure decreases to the lower limit pressure. The controller 4 carries out, when the anode pressure decreasing flag F is 0, processing of Step S72. On the other hand, the controller 4 carries out, when the anode pressure decreasing flag F is 1, processing of Step S77.

In Step S72, the controller 4 sets, based on the upper limit value of the anode pressure, the opening of the pressure regulation valve 33 so that the anode pressure can be increased to at least the upper limit value.

In Step S73, the controller 4 opens the pressure regulation valve 33 to the opening set in Step S72.

In Step S74, the controller 4 determines whether or not the anode pressure is equal to or higher than the upper limit value. The controller 4 carries out, when the anode pressure is equal to or more than the upper limit value, processing of Step S75. On the other hand, the controller 4 carries out, when the anode pressure is less than the upper limit value, the processing of Step S77.

In Step S75, the controller 4 fully closes the pressure regulation valve 33.

In Step S76, the controller 4 sets the anode pressure decreasing flag F to 1.

In Step S77, the controller 4 determines whether or not the anode pressure is equal to or less than the lower limit value. The controller 4 carries out, when the anode pressure is equal to or less than the lower limit value, processing of Step S78. On the other hand, the controller 4 ends, when the anode pressure is higher than the lower limit value, the current processing.

In Step S78, the controller 4 sets the anode pressure decreasing flag F to 0.

FIG. 7 is a flowchart illustrating the downward transient operation processing.

In Step S81, the controller 4 sets the opening of the pressure regulation valve 33 to a predetermined opening for downward transition. Usually, after reaching the upper limit value, the anode pressure is controlled to reach the lower limit value by means of the feedback control. Specifically, the pressure regulation valve 33 is controlled to be fully closed. In the downward transition, the pressure regulation valve 33 is opened to a predetermined opening at a level which does not generate the position where the anode gas density is the lowest, which has been described referring to FIG. 12, in the electric power generation region in the anode gas flow passages 121 to thereby supply hydrogen. Thus, the rate of the pressure decrease can be suppressed.

Moreover, the anode pressure is basically determined based on the opening of the pressure regulation valve 33, and the anode gas amount consumed by the electrode reactions inside the fuel cell stack. Therefore, the opening for downward transition of the pressure regulation valve 33 is set so that the anode gas amount supplied from the high pressure tank 31 to the fuel cell stack 2 is smaller than the anode gas amount consumed by the electrode reactions inside the fuel cell stack, in order to decrease the anode pressure at least in the downward transient operation.

When the opening for downward transition is too large, the pressure decrease rate becomes too high. Thus, an opening which can effectively suppress the backward flow of the anode-off gas from the buffer tank 36 and simultaneously quickly decrease the pressure is acquired by an experiment or the like. Moreover, in order to effectively suppress the backward flow, a target decrease rate may be determined. Also, by carrying out the feedback control based on the target value, the same control as that described above may be realized.

In Step S82, the controller 4 opens the pressure regulation valve 33 to the opening for downward transition.

In Step S83, the controller 4 determines whether or not the anode pressure is equal to or lower than the lower limit pressure. The controller 4 carries out, when the anode pressure is equal to or less than the lower limit pressure, processing of Step S84. On the other hand, the controller 4 carries out, when the anode pressure is higher than the lower limit pressure, the processing of Step S85.

In Step S84, the controller 4 sets the downward transient operation flag f to 0.

In Step S85, the controller 4 sets the downward transient operation flag f to 1.

In this way, by setting, in the downward transition, the opening larger than the opening (full closure) of the pressure regulation valve 33 determined by the normal control, the pressure decrease rate in the electricity generation region with respect to the buffer tank 36 can be suppressed. As a result, during the transition, the purge gradually occurs, resulting in suppression of the entrance of nitrogen into the electricity generation region. According to this embodiment, the pressure regulation valve 33 is fully closed in the normal control, but the pressure regulation valve 33 need not be fully closed as long as the opening is smaller than the opening in the downward transition.

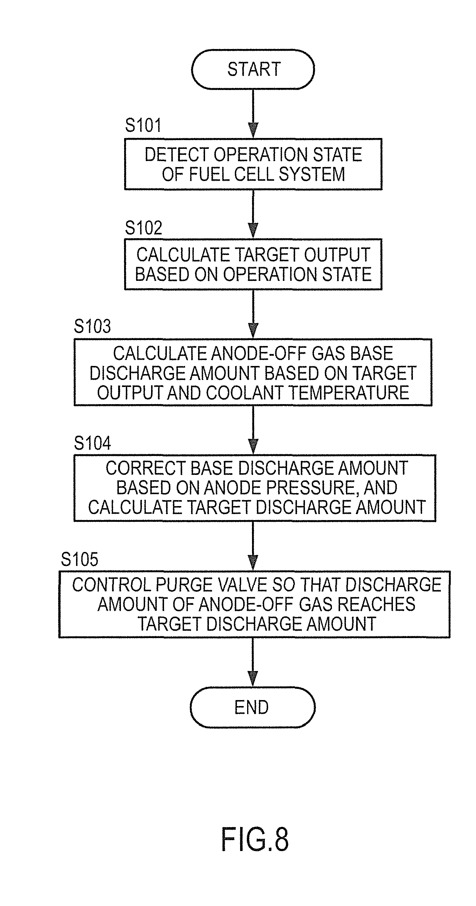

FIG. 8 is a flowchart illustrating control of the purge valve 38 carried out independently of the pulsation operation control.

In Step S101, the controller 4 reads the detected values of the above-mentioned various sensors, thereby detecting the operation state of the fuel cell system 1.

In Step S102, the controller 4 calculates, based on the operation state of the fuel cell system 1, the target output of the fuel cell stack 2.

In Step S103, the controller 4 calculates, based on the target output and the coolant temperature, a base discharge amount of the anode-off gas. The base discharge amount of the anode-off gas is set to increase as the target output increases and as the coolant temperature increases.

In Step S104, the controller 4 corrects the base discharge amount of the anode-off gas based on the anode pressure, and calculates the target discharge amount. The correction is carried out so that, as the anode pressure decreases, the target discharge amount decreases. This is because the internal pressure of the buffer tank 36 needs to be maintained to be equal to or more than a predetermined pressure, thereby maintaining the density (partial pressure) of the anode gas in the buffer tank to a value equal to or less than a predetermined value.

In Step S105, the controller 4 controls the opening of the purge valve so that the anode-off gas amount discharged from the buffer tank 36 via the purge passage 37 to the outside air reaches the target discharge amount of the anode-off gas.

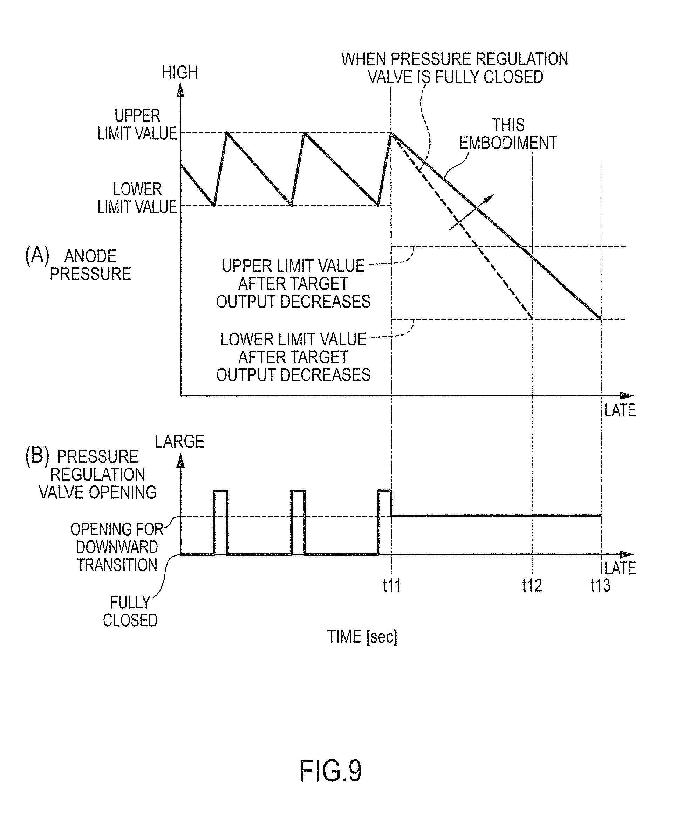

FIGS. 9 are time charts illustrating the operation of the pulsation operation control according to this embodiment. In order to clarify the correspondence to the flowcharts, a description is given along with the step numbers in the flowcharts.

When, for example, the accelerator operation amount decreases and the target output of the fuel cell stack 2 decreases at the time t11, the upper limit value and the lower limit value of the anode pressure are set in accordance with the decreased target output (FIG. 9(A); S1-S3). Then, the target output of the fuel cell stack 2 calculated at the time t11 is lower than the target output of the fuel cell stack 2 calculated last time, and the downward transient operation flag f is set to the initial value 0, and hence the downward transient operation processing is carried out (No in S4, No in S5, Yes in S6, and S8).

When the downward transient operation processing is carried out, the pressure regulation valve 33 is opened to the predetermined opening for downward transition (FIG. 9(B); S81 and S82), and the downward transient operation flag f is set to 1 (No in S83, and S85).

By adjusting, in the downward transient operation, the pressure regulation valve 33 to the opening for downward transition, it is possible to supply the anode gas, which is smaller in amount than the anode gas consumed in the electrode reactions inside the fuel cell stack in the downward transient operation but which compensates for a part of the consumed amount, from the high pressure tank 31 to the fuel cell stack 2, and to decrease the anode pressure to the lower limit pressure (FIG. 9(A)).

In this way, according to this embodiment, the anode gas is supplied in the downward transient operation from the high pressure tank 31 to the fuel cell stack 2. As a result, as represented by a broken line in FIG. 9(A), compared to the case where the pressure regulation valve 33 is fully closed and the anode pressure is decreased to the lower limit pressure, the time until the anode pressure decreases to the lower limit pressure increases. In other words, according to this embodiment, compared to the case where the pressure regulation valve 33 is fully closed and the anode pressure is decreased to the lower limit pressure, an absolute value of a gradient of a falling line is smaller when the anode pressure is decreased to the lower limit pressure.

It should be noted that, in the downward transition such as a transition from a full output state to an idle operation, when the pressure regulation valve 33 is fully closed, a time period during which the anode pressure decreases to the lower limit pressure (time t11 to time 12) is approximately 10 seconds. On the other hand, as in this embodiment, a time period during which the pressure regulation valve 33 is opened to the predetermined opening for downward transition and the anode pressure is decreased to the lower limit pressure (time t11 to time 13) is approximately 20 to 30 seconds. It should be noted that the scale is changed in FIGS. 12 for the sake of the space.

The target output is constant until the time t13 at which the anode pressure reaches the lower limit pressure. However the downward transient operation flag f is set to 1, and the downward transient operation processing thus continues (No in S4, Yes in S5, and S8).

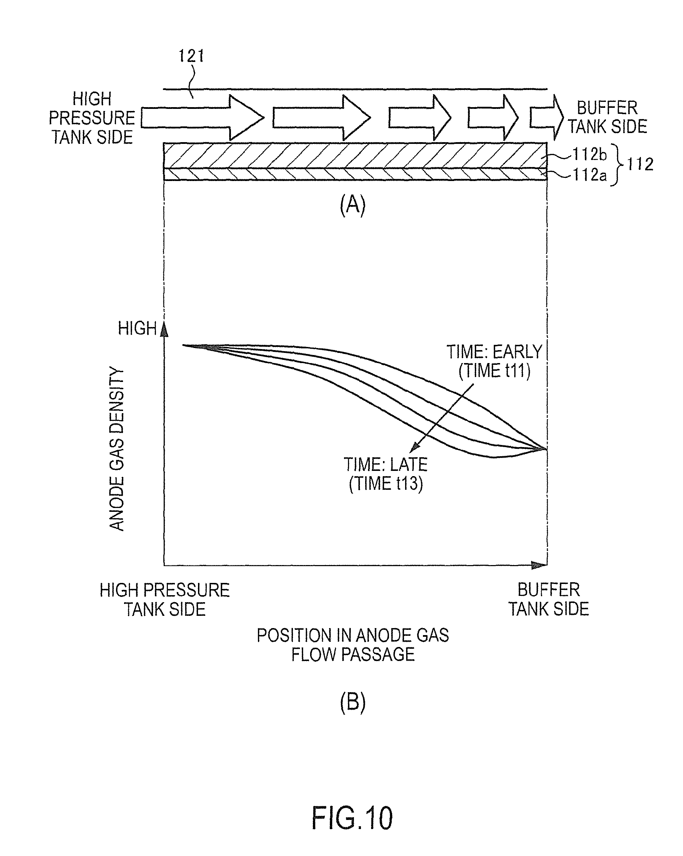

FIGS. 10 are diagrams illustrating an effect of the pulsation operation control according to this embodiment. FIG. 10(A) is a diagram illustrating, when the pressure regulation valve 33 is opened to the predetermined opening for downward transition in the downward transient operation, the flows of the anode gas and the anode-off gas inside the anode gas flow passage 121. FIG. 10(B) is a diagram illustrating, when the pressure regulation valve 33 is opened to the predetermined opening for downward transition in the downward transient operation, the density distribution of the anode gas inside the anode gas flow passage 121 along with the elapse of time.

According to this embodiment, in the downward transient operation, the pressure regulation valve 33 is opened to the predetermined opening for downward transition. As a result, the anode gas, which is smaller in amount than the anode gas consumed in the electrode reactions inside the fuel cell stack but which compensates for a part of the consumed amount, can be supplied from the high pressure tank 31 to the fuel cell stack 2.

As a result, in the downward transient operation, the pressure difference generated between each of the anode gas flow passages 121 and the buffer tank 36 can be reduced to a small value, and hence the flow amount of the anode-off gas flowing backward from the buffer tank 36 to the anode gas flow passages 121 can be suppressed.

As a result, as illustrated in FIG. 10(A), the stagnation point where the anode gas and the anode-off gas merge is prevented from being generated in the anode gas flow passage 121. As a result, as illustrated in FIG. 10 (B), the portion which is locally lower in anode gas density than the other portions is prevented from being generated inside the anode gas flow passage 121, resulting in suppression of the degradation of the fuel cell 10. As a result, the reliability and durability of the fuel cell system 1 can be increased.

Although this invention has been described by way of the specific embodiment above, this invention is not limited to the above embodiment. It is possible for a person skilled in the art to modify or alter the above embodiment in various manners within the technical scope of the present invention.

For example, according to the above-mentioned embodiment, the opening of the pressure regulation valve in the downward transient operation is adjusted to the predetermined opening for downward transition, but the nitrogen amount cross-leaking from the cathode side to the anode gas flow passages 121 and the nitrogen amount in the buffer tank 36 may be recognized in accordance with the operation state of the fuel cell system 1 by calculation or the like, and the opening for downward transition may be variably adjusted in accordance with the nitrogen amounts. In other words, the gradient of the falling line when the anode pressure is decreased to the lower limit pressure in the downward transient operation may be changed in accordance with the operation state of the fuel cell system 1.

For the above description, the contents of Japanese Patent Application No. 2011-37675, filed on February 23, 2011 are hereby incorporated by reference.

## Claims

1. A fuel cell system for generating electricity by supplying a fuel cell with an anode gas and a cathode gas, the fuel cell system comprising:
a buffer tank for storing an anode-off gas discharged from the fuel cell;
a control valve for controlling a pressure of the anode gas supplied to the fuel cell; and
anode gas pressure control unit configured to control the control valve to increase the pressure of the anode gas as a required output increases,
wherein the anode gas pressure control unit adjusts, in a downward transient operation in which the required output decreases, an opening of the control valve to a predetermined opening, thereby decreasing the pressure of the anode gas while supplying the anode gas.

2. The fuel cell system according to claim 1, wherein the anode gas pressure control unit adjusts the opening of the control valve so that an anode gas amount supplied to the fuel cell in the downward transient operation is smaller than an anode gas amount consumed in the fuel cell in the downward transient operation.

3. The fuel cell system according to claim 1 or 2, further comprising normal operation unit configured to periodically increase/decrease the pressure of the anode gas in a steady operation by control of the control valve and a pressure decrease caused by electric power consumption.

4. A fuel cell system for generating electricity by supplying a fuel cell with an anode gas and a cathode gas, the fuel cell system comprising:
a buffer tank for storing an anode-off gas discharged from the fuel cell;
a control valve for controlling a pressure of the anode gas supplied to the fuel cell;
a target pressure setting unit configured to increase a target pressure in response to a required output; and
an anode gas pressure control unit configured to control the control valve based on the target pressure and an actual pressure, thereby controlling the pressure of the anode gas,
wherein the anode gas pressure control unit increases an opening of the control valve so as to be larger than an opening of the control valve set by the anode gas pressure control unit, in a downward transient operation in which the required output decreases.
